# EUROPÄISCHE PATENTSCHRIFT

(11) **EP 3 767 265 B1**
(45) Veröffentlichungstag und Bekanntmachung des Hinweises auf die Patenterteilung: **20.07.2022**
(21) Anmeldenummer: 20175340.7
(22) Anmeldetag: 19.05.2020
(51) Int. Cl.: G01L 5/22, G01L 1/20, G01L 5/00, B65B 39/02, B65B 57/00

(54) **MANIPULATIONSDETEKTIONSSYSTEM FÜR EINEN ABFÜLLSTUTZEN EINER ABFÜLLANLAGE UND VERFAHREN ZUM DETEKTIEREN EINER MANIPULATION AN EINEM ABFÜLLSTUTZEN EINER ABFÜLLANLAGE**
MANIPULATION DETECTION SYSTEM FOR A FILLING NOZZLE OF A FILLING STATION AND METHOD FOR DETECTING A MANIPULATION ON A FILLING NOZZLE OF A FILLING SYSTEM
SYSTÈME DE DÉTECTION D'UNE MANIPULATION POUR UN EMBOUT DE REMPLISSAGE D'UNE INSTALLATION DE REMPLISSAGE ET PROCÉDÉ DE DÉTECTION D'UNE MANIPULATION D'UN EMBOUT DE REMPLISSAGE D'UNE INSTALLATION DE REMPLISSAGE

(30) Priorität: 17.07.2019 DE 102019119414
(43) Veröffentlichungstag der Anmeldung: 20.01.2021
(73) Patentinhaber: Pilz GmbH & Co. KG, 73760 Ostfildern (DE)
(72) Erfinder: Neuschwander, Bernd, 73760 Ostfildern (DE); Ibrocevic, Onedin, 73760 Ostfildern (DE)
(74) Vertreter: Schäperklaus, Jochen

(56) Entgegenhaltungen:
- EP-A1- 3 399 292
- DE-A1-102011 111 483

## Beschreibung

Die vorliegende Erfindung betrifft eine Abfüllanlage, umfassend einen Abfüllstutzen und einen Anschlussstutzen, wobei der Abfüllstutzen in den Anschlussstutzen eingesetzt ist. Darüber hinaus betrifft die vorliegende Erfindung ein Verfahren zum Detektieren einer Manipulation an einem Abfüllstutzen einer Abfüllanlage.

Abfüllanlagen, mittels derer insbesondere schüttfähige Lebensmittel in Verpackungen oder sonstige Behältnisse abgefüllt werden können, weisen zumindest einen Abfüllstutzen auf, der in einen anlagenseitig vorgesehenen Anschlussstutzen eingesetzt ist. Während des Abfüllprozesses gelangen die Lebensmittel dabei aus dem Abfüllstutzen in die Verpackungen oder die sonstigen Behältnisse. In diesem Zusammenhang ist es insbesondere unter dem Aspekt der Lebensmittelsicherheit wichtig, dass der Abfüllstutzen korrekt innerhalb des Anschlussstutzens positioniert ist und insbesondere nicht nachträglich manipuliert wurde.

Die EP 3 399 292 A1 offenbart einen taktilen Sensor, mittels dessen die Position eines Roboters kontrolliert werden kann.

Aus der DE 10 2011 111 483 A1 ist ein Verfahren zum Detektieren einer Manipulation an einem Abfüllstutzen einer Abfüllanlage bekannt.

Die Erfindung macht es sich zur Aufgabe, eine Abfüllanlage der eingangs genannten Art sowie ein Verfahren zum Detektieren einer Manipulation an einem Abfüllstutzen einer Abfüllanlage zur Verfügung zu stellen, mittels derer etwaige Manipulationen des Abfüllstutzens auf einfache und kostengünstige Weise sicher erfasst werden können.

Die Lösung dieser Aufgabe liefern eine gattungsgemäße Abfüllanlage mit den Merkmalen des kennzeichnenden Teils des Anspruchs 1 sowie ein Verfahren zum Detektieren einer Manipulation an einem Abfüllstutzen einer Abfüllanlage mit den Merkmalen des Anspruchs 8. Die Unteransprüche betreffen vorteilhafte Weiterbildungen der Erfindung.

Eine erfindungsgemäße Abfüllanlage zeichnet sich durch ein Manipulationsdetektionssystem aus, umfassend einen flächigen, taktilen Sensor mit einer Anzahl n ≥ 2 druckempfindlicher und individuell auswertbarer Sensorsegmente, der sich in einem Anschlussbereich für den Abfüllstutzen entlang eines Innenumfangs des Anschlussstutzens erstreckt und zwischen dem Anschlussstutzen und dem Abfüllstutzen angeordnet ist, sowie eine Auswerteeinrichtung, die an die Sensorsegmente angeschlossen ist und die dazu ausgebildet ist, für jedes der Sensorsegmente einen auf dieses einwirkenden Druck zu erfassen. Mit Hilfe des erfindungsgemäß vorgesehenen Manipulationsdetektionssystems lassen sich nachträgliche Manipulationen an dem Abfüllstutzen, insbesondere der Versuch des Lösens des Abfüllstutzens aus dem Anschlussstutzen der Abfüllanlage, sehr einfach, insbesondere auch automatisiert, erfassen. Vorzugsweise kann der taktile Sensor vier Sensorsegmente aufweisen, die insbesondere gleich groß ausgeführt sein können, so dass jedes der vier Sensorsegmente bei einem Abfüllstutzen mit einem kreisförmigen Querschnitt jeweils einen Winkelbereich von 90° überstreicht. Der taktile Sensor kann auf ganz unterschiedliche Weise an der Innenseite des Anschlussstutzens befestigt sein. So ist es zum Beispiel möglich, dass der taktile Sensor in dem Anschlussbereich für den Abfüllstutzen mit der Innenseite des Anschlussstutzens verklebt ist. Alternativ kann zum Beispiel auch ein Klemmring vorgesehen sein, der bei der Montage in den Anschlussstutzen eingesetzt wird und der dazu ausgebildet ist, den taktilen Sensor in seiner Montagesolllage vor der späteren Montage des Abfüllstutzens klemmend an der Innenseite des Anschlussstutzens zu fixieren. Grundsätzlich ist auch eine Kombination einer Klebeverbindung mit einer Klemmverbindung, die insbesondere mittels des Klemmrings realisiert werden kann, möglich. Der Abfüllstutzen wird in die Aufnahmeöffnung des Anschlussstutzens eingesetzt und übt bei korrekter Montage typischerweise einen relativ gleichmäßigen Druck auf alle Sensorsegmente des taktilen Sensors aus, insbesondere sofern der Anschlussstutzen und der Abfüllstutzen einen kreisförmigen Querschnitt aufweisen. Wenn die Auswerteeinrichtung dann für jedes der Sensorsegmente im Wesentlichen den gleichen Druck erfasst, ist der Abfüllstutzen korrekt montiert und befindet sich in seiner Montagesolllage. Die Dichtigkeit der Anordnung wird dabei durch den Abfüllstutzen selbst gewährleistet, der passgenau innerhalb des Anschlussstutzens montiert ist. Wenn der Abfüllstutzen nachträglich manipuliert wurde und sich nicht mehr in seiner Montagesolllage befindet, erfasst zumindest eines der Sensorsegmente einen gegenüber dem korrekt montierten Zustand des Abfüllstutzens signifikant veränderten Druck, der von der Auswerteeinrichtung ausgewertet und von dieser vorzugsweise in eine entsprechende Reaktionsmaßnahme umgesetzt wird. Mögliche Reaktionsmaßnahmen auf dieses Ereignis können beispielsweise das automatisierte Abschalten der Abfüllanlage und/oder die Ausgabe einer Warnmeldung beziehungsweise eines Warnsignals sein.

Der taktile Sensor weist in einer vorteilhaften Ausführungsform eine erste und eine zweite Schicht auf, die mit elektrisch leitfähigen Elektroden versehen sind, die mittels einer komprimierbaren, drucksensitiven Zwischenschicht voneinander beabstandet sind, wobei sich bei der Komprimierung der Zwischenschicht eine elektrische Eigenschaft zwischen den Elektroden ändert, die mittels der Auswerteeinrichtung erfassbar ist. Die Zwischenschicht ist so ausgebildet, dass sie durch die Einwirkung einer Druckkraft, die von dem in den Anschlussstutzen eingesetzten Abfüllstutzen erzeugt wird, komprimiert wird. Durch diese Komprimierung ändert sich eine elektrische Eigenschaft zwischen den Elektroden, die mittels der Auswerteeinrichtung erfassbar ist und ein Maß für den auf die einzelnen Sensorsegmente ausgeübten Druck ist. Die Zwischenschicht kann zum Beispiel komprimierbare Elemente aufweisen, so dass die Elektroden der beiden Schichten bei einer Druckbeanspruchung, die einen bestimmten, durch die Elastizitätseigenschaften der Zwischenschicht vorgegebenen Grenzwert überschreitet, aufeinandergedrückt werden und es zu einem unmittelbaren Kontakt zwischen den Elektroden kommt. Vorzugsweise sind bei korrekt montiertem Abfüllstutzen die Elektroden in allen Sensorsegmente aufeinandergedrückt, so dass in allen Sensorsegmenten die Elektroden miteinander in Kontakt stehen. Wird durch ein zumindest teilweises Lösen des Abfüllstutzens aus dem Anschlussstutzen der auf zumindest eines der Sensorsegmente wirkende Druck derart verringert, dass der für das Aufeinanderdrücken der Elektroden des betreffenden Sensorsegments erforderliche Grenzwert unterschritten wird, stehen die Elektroden in dem betreffenden Sensorsegment nicht mehr in Kontakt miteinander. Dieses kann von der Auswerteeinheit entsprechend detektiert werden.

In einer alternativen Ausführungsform kann die Zwischenschicht auch aus einem Material hergestellt sein, welches seinen elektrischen Widerstand bei einer Druckbeanspruchung ändert. Eine derartige Zwischenschicht kann zum Beispiel vollflächig ausgebildet sein. Somit kann auch dann, wenn die Elektroden der beiden Schichten nicht in einen unmittelbaren Kontakt miteinander kommen, mittels der entsprechend ausgeführten Auswerteeinrichtung diese Widerstandsänderung erfasst werden kann. Durch eine entsprechende Kalibrierung und Zuordnung der gemessenen elektrischen Widerstandswerte zu Druckwerten, kann der Druck in jedem der Sensorsegmente in dieser Ausführungsform relativ genau bestimmt werden.

Die mit den Elektroden versehenen Schichten können vorzugsweise als Flächengebilde, insbesondere als textile Flächengebilde mit darin eingenähten oder eingewobenen Elektroden aus elektrisch leitfähigen Garnen, ausgeführt sein. Derartige Flächengebilde, insbesondere textile Flächengebilde, zeichnen sich durch eine hohe Flexibilität aus, so dass der durch die beiden Schichten und die zwischen diesen angeordnete Zwischenschicht gebildete taktile Sensor sehr einfach an die Form des Anschlussstutzens beziehungsweise des Abfüllstutzens angepasst und darüber hinaus auch einfach montiert werden kann.

In einer bevorzugten Ausführungsform wird vorgeschlagen, dass die erste Schicht des taktilen Sensors mit zumindest einer elektrisch leitfähigen Elektrode versehen ist, die sich durch alle Sensorsegmente hindurch erstreckt. Somit weisen alle Sensorsegmente in der ersten Schicht zumindest eine, gegebenenfalls auch mehrere gemeinsame Elektrode/n auf.

In einer besonders bevorzugten Ausführungsform besteht die Möglichkeit, dass die zweite Schicht des taktilen Sensors eine Anzahl von Elektroden aufweist, die der Anzahl der Sensorsegmente oder einem Vielfachen der Anzahl der Sensorsegmente entspricht. Vorzugsweise erstrecken sich die Elektroden der zweiten Schicht des taktilen Sensors orthogonal zu der mindestens einen, allen Sensorsegmenten gemeinsamen Elektrode der ersten Schicht, so dass eine matrixartige Struktur der Sensorsegmente des taktilen Sensors erhalten werden kann, die sich mittels der Auswerteeinrichtung relativ einfach auswerten lässt. In diesem Zusammenhang hat es sich als zweckmäßig erwiesen, dass die Anzahl der Elektroden in der zweiten Schicht in jedem der Sensorsegmente identisch ist.

In einer vorteilhaften Ausführungsform kann vorgesehen sein, dass in der Auswerteeinrichtung für jedes der Sensorsegmente ein Druckreferenzwert definiert ist, der den bei der korrekten Montage des Abfüllstutzens in dem Anschlussstutzen auf die jeweiligen Sensorsegmente ausgeübten Druck repräsentiert. Dieses hat den Hintergrund, dass sich die von den Sensorsegmenten gemessenen Druckwerte bei bestimmten Ausführungen und geometrischen Gestaltungen des Abfüllstutzens und des Anschlussstutzens, wie zum Beispiel bei länglich elliptischen und von einer Kreisform abweichenden Querschnittsformen, von vornherein unterscheiden können. Mit anderen Worten können sich die in den einzelnen Sensorsegmenten gemessenen Druckwerte voneinander unterscheiden, obwohl eine korrekte Montage des Abfüllstutzens innerhalb des Anschlussstutzens vorliegt. Die Druckreferenzwerte können aber auch für jedes der Sensorsegmente identisch beziehungsweise im Wesentlichen identisch sein.

In einer besonders vorteilhaften Ausführungsform kann vorgesehen sein, dass in der Auswerteeinrichtung für jeden der Druckreferenzwerte der Sensorsegmente ein Toleranzbereich definiert ist. Dieser Toleranzbereich gibt an, bis zu welchem Druck der Abfüllstutzen noch als korrekt montiert angesehen werden kann.

Ein erfindungsgemäßes Verfahren zum Detektieren einer Manipulation an einem Abfüllstutzen einer Abfüllanlage, wobei der Abfüllstutzen in einen Anschlussstutzen der Abfüllanlage eingesetzt ist, umfasst die Schritte:
- Bereitstellen eines flächigen, taktilen Sensors mit einer Anzahl n ≥ 2 druckempfindlicher und individuell auswertbarer Sensorsegmente, der in einem Anschlussbereich für den Abfüllstutzen zwischen dem Anschlussstutzen und dem Abfüllstutzen derart positioniert wird, dass er sich entlang eines Innenumfangs des Anschlussstutzens erstreckt und von dem in den Anschlussstutzen eingesetzten Abfüllstutzen mit einem Druck beaufschlagt wird,
- Erfassen des auf jedes der Sensorsegmente ausgeübten Drucks mittels einer Auswerteeinrichtung, die an den taktilen Sensor angeschlossen wird, und
- Überprüfen, ob die gemessenen Druckwerte eine Manipulation des Abfüllstutzens indizieren.

Das erfindungsgemäße Verfahren ermöglicht auf einfache Weise eine Überprüfung, ob der in den Anschlussstutzen der Abfüllanlage eingesetzte Abfüllstutzen unter Umständen nachträglich manipuliert wurde. Wenn der Abfüllstutzen nachträglich - beispielsweise unter Verwendung eines Schraubendrehers - manipuliert und zumindest teilweise gelöst wurde, erfasst zumindest eines der Sensorsegmente einen gegenüber dem korrekt montierten Zustand des Abfüllstutzens signifikant veränderten Druck, der von der Auswerteeinrichtung ausgewertet und in eine entsprechende Reaktionsmaßnahme umgesetzt wird. Mögliche Reaktionsmaßnahmen auf dieses Ereignis können beispielsweise das Abschalten der Abfüllanlage und/oder die Ausgabe einer Warnmeldung beziehungsweise eines Warnsignals sein.

In einer bevorzugten Ausführungsform wird vorgeschlagen, dass in der Auswerteeinrichtung für jedes der Sensorsegmente ein Druckreferenzwert definiert wird, der den bei der korrekten Montage des Abfüllstutzens in dem Anschlussstutzen auf die jeweiligen Sensorsegmente ausgeübten Druck repräsentiert.

In einer besonders bevorzugten Ausführungsform kann vorgesehen sein, dass in der Auswerteeinrichtung für jeden der Druckreferenzwerte der Sensorsegmente ein Toleranzbereich definiert wird. Dieser Toleranzbereich gibt solche Druckwerte an, bei denen der Abfüllstutzen noch als korrekt montiert angesehen werden kann. Wenn der gemessene Druck zumindest eines der Sensorsegmente außerhalb des für das betreffende Sensorsegment definierten Toleranzbereichs liegt, deutet dieses insbesondere auf eine nachträgliche Manipulation des Abfüllstutzens hin, so dass die Auswerteeinrichtung die entsprechenden Reaktionsmaßnahmen einleiten kann.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen:
- Fig. 1: eine Seitenansicht eines Teils eines Anschlussstutzens einer Abfüllanlage mit einem darin aufgenommenen Abfüllstutzen,
- Fig. 2: eine schematisch stark vereinfachte Darstellung eines Manipulationsdetektionssystems für einen Abfüllstutzen einer Abfüllanlage, das gemäß einem bevorzugten Ausführungsbeispiel der vorliegenden Erfindung ausgeführt ist,
- Fig. 3: einen taktilen Sensor des Manipulationsdetektionssystems in einer Querschnittsansicht,
- Fig. 4: eine Querschnittsansicht des Anschlussstutzens mit dem innerhalb des Anschlussstutzens angeordneten taktilen Sensors des Manipulationsdetektionssystems und dem innerhalb des Anschlussstutzens aufgenommenen Abfüllstutzen.

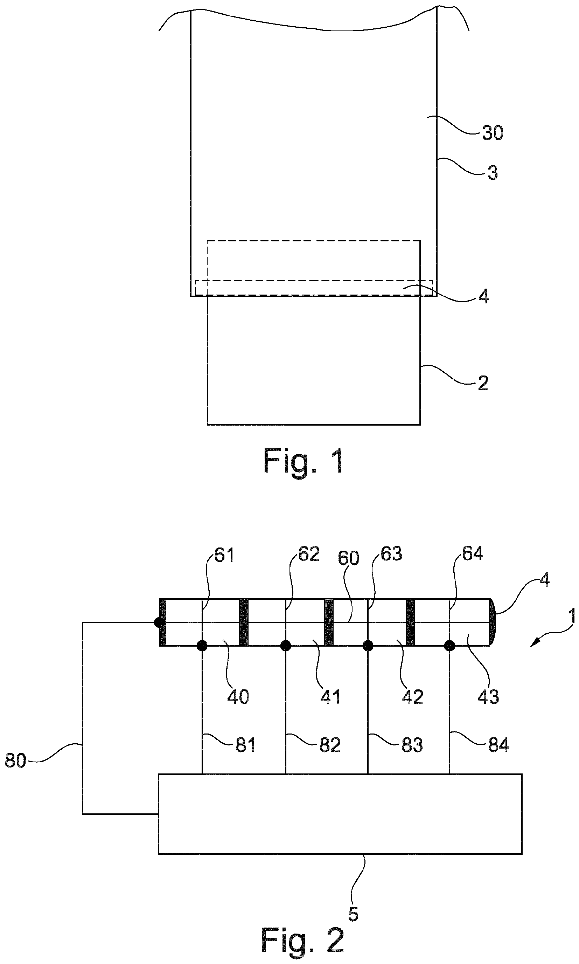

In Fig. 1 ist eine Seitenansicht eines Teils eines Anschlussstutzens 3 einer ansonsten nicht weiter dargestellten Abfüllanlage mit einem darin aufgenommenen Abfüllstutzen 2 gezeigt. Mittels der Abfüllanlage können zum Beispiel schüttfähige Lebensmittel verpackt werden, die über den Abfüllstutzen in die entsprechenden Verpackungen abgefüllt werden können. In diesem Zusammenhang ist es insbesondere unter dem Aspekt der Lebensmittelsicherheit wichtig, dass der Abfüllstutzen 2 innerhalb des Anschlussstutzens 3 korrekt positioniert ist und zum Beispiel nicht nachträglich manipuliert wurde.

Nachfolgend wird unter weiterer Bezugnahme auf Fig. 2 bis 4 ein Manipulationsdetektionssystem 1 vorgestellt, das gemäß einem bevorzugten Ausführungsbeispiel der vorliegenden Erfindung ausgeführt ist und mittels dessen auf einfache Weise überprüft werden kann, ob der Abfüllstutzen 2 nachträglich manipuliert wurde.

Wie in Fig. 2 zu erkennen, umfasst das Manipulationsdetektionssystem 1 einen flächigen, taktilen Sensor 4, der bei der Montage in einem Anschlussbereich für den Abfüllstutzen 2 zwischen dem Anschlussstutzen 3 und dem Abfüllstutzen 2 angeordnet wird, und eine Auswerteeinrichtung 5, die an den taktilen Sensor 4 angeschlossen ist und die dazu ausgebildet ist, Messsignale des taktilen Sensors 4 zu verarbeiten und auszuwerten.

Der taktile Sensor 4 ist mehrschichtig aufgebaut und weist in diesem Ausführungsbeispiel n = 4 taktile Sensorsegmente 40, 41, 42, 43 auf, die Druckwerte erfassen können und die einzeln von der Auswerteeinrichtung 5 auswertbar sind. Die taktilen Sensorsegmente 40, 41, 42, 43 sind druckempfindlich, so dass sie auf äußere mechanische Belastungen reagieren können. Dadurch, dass n = 4 taktile Sensorsegmente 40, 41, 42, 43 vorgesehen sind, können Druckmessungen vorgenommen werden, bei denen gleichzeitig eine Ortsinformation erhalten werden kann. Denn mittels der Auswerteeinrichtung 5 kann bestimmt werden, welches der Sensorsegmente 40, 41, 42, 43 einen bestimmten Druckwert erfasst hat. Die vier Sensorsegmente 40, 41, 42, 43 sind in diesem Ausführungsbeispiel gleich groß ausgeführt, so dass jedes der vier Sensorsegmente 40, 41, 42, 43 bei einem Abfüllstutzen 2 mit einem kreisförmigen Querschnitt jeweils einen Winkelbereich (Messbereich) von 90° überstreicht.

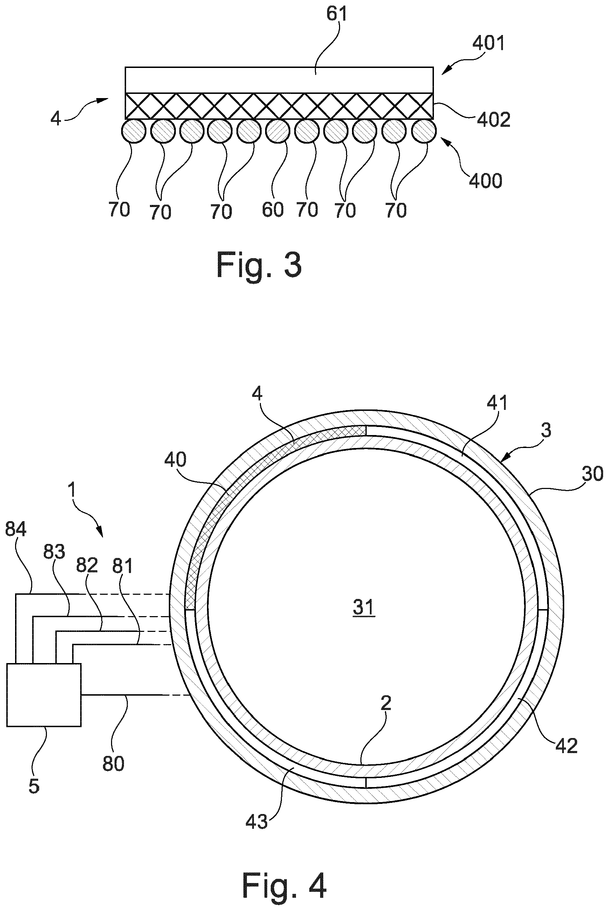

Wie in Fig. 3 zu erkennen, ist der taktile Sensor 4 mehrschichtig ausgeführt und umfasst mindestens eine erste Schicht 400, mindestens eine zweite Schicht 401 sowie eine druckempfindliche Zwischenschicht 402, mittels derer die erste Schicht 400 und die zweite Schicht 401 voneinander beabstandet sind. Die erste Schicht 400 und die zweite Schicht 401 sind als textile Flächengebilde ausgeführt und somit entsprechend flexibel gestaltet.

Die erste Schicht 400 umfasst zumindest eine elektrisch leitfähige Elektrode 60, die sich in Längsrichtung L durch alle vier Sensorsegmente 40, 41, 42, 43 hindurch erstreckt und somit eine allen Sensorsegmenten 40, 41, 42, 43 gemeinsame Elektrode 60 bildet. In der zweiten Schicht 401 sind insgesamt vier Elektroden 61, 62, 63, 64 ausgebildet, die sich in Längsrichtung voneinander beabstandet parallel zueinander erstrecken. Jedes der vier Sensorsegmente 40, 41, 42, 43 weist die allen Sensorsegmenten 40, 41, 42, 43 gemeinsame Elektrode 60 der ersten Schicht 400 und jeweils eine der vier Elektroden 61, 62, 63, 64 der zweiten Schicht 401 auf. Die Elektrode 60 der ersten Schicht 400 und die Elektroden 61, 62, 63, 64 der zweiten Schicht 401 sind matrixartig angeordnet, so dass sie die vier separat auswertbaren Sensorsegmente 40, 41, 42, 43 bilden, und schließen vorzugsweise einen Winkel von 90° miteinander ein. Grundsätzlich sind aber auch andere Winkel zwischen der Elektrode 60 der ersten Schicht 400 und den Elektroden 61, 62, 63, 64 der zweiten Schicht 401 möglich.

Die Elektroden 60, 61, 62, 63, 64 sind vorzugsweise aus einem elektrisch leitfähigen Garn ausgebildet. Ein derartiges elektrisch leitfähiges Garn ist im Allgemeinen ein linienförmiges Textilgebilde, welches zu Geweben, Gestricken, Gewirken und Stickereien verarbeitet werden kann und insbesondere auch zum Nähen verwendet werden kann. Gegenüber einem herkömmlichen, nicht elektrisch leitfähigen Garn ist ein leitfähiges Garn dazu ausgebildet, elektrischen Strom zu führen. Dieses kann zum Beispiel dadurch erreicht werden, dass das Garn aus leitfähigen Fasern, beispielsweise unter der Verwendung von Edelstahlfasern, gesponnen wird. Alternativ kann aber auch ein herkömmlicher, nicht elektrisch leitender Faden leitfähig gemacht werden, indem dieser mit einem elektrisch leitfähigen Material beschichtet wird. Vorzugsweise sind die Elektroden 60, 61, 62, 63, 64 jeweils durch einen Faden eines elektrisch leitfähigen Garns gebildet, so dass sie dementsprechend flexibel ausgeführt sind. Es versteht sich, dass die Elektroden 60, 61, 62, 63, 64 in anderen, hier nicht explizit dargestellten Ausführungsbeispielen grundsätzlich auch aus einer Mehrzahl elektrisch leitfähiger Fäden gebildet sein können.

Die erste Schicht 400 und die zweite Schicht 401 weisen zusätzlich zu den Elektroden 60, 61, 62, 63, 64 weitere elektrisch nicht-leitende Fäden 70 auf, die sich parallel zu den Elektroden 60, 61, 62, 63, 64 erstrecken und mittels quer zu diesen verlaufenden, hier nicht explizit dargestellten Fäden miteinander verbunden, insbesondere miteinander verwoben, sind, um dadurch die textilen Flächengebilde zu bilden. Die elektrisch nicht-leitenden Fäden der zweiten Schicht 401 sind in der Darstellung gemäß Fig. 2 nicht zu erkennen, da sie dort von der Elektrode 61 verdeckt sind. Die Elektroden 60, 61, 62, 63, 64 sind unmittelbar oder wie in dem hier gezeigten Ausführungsbeispiel mittelbar, insbesondere mit Hilfe zusätzlicher elektrischer Anschlusskabel 80, 81, 82, 83, 84, mit der Auswerteeinrichtung 5 verbunden, mittels derer der in den einzelnen Sensorsegmenten 40, 41, 42, 43 herrschende Druck individuell ausgewertet werden kann.

Der taktile Sensor 4 weist somit zwei mit den elektrisch leitfähigen Elektroden 60, 61, 62, 63, 64 versehene, als textile Flächengebilde ausgeführte Schichten 400, 401 auf, welche durch die drucksensitive Zwischenschicht 402 voneinander getrennt sind. Der taktile Sensor 4 arbeitet ganz allgemein nach dem Prinzip, dass sich eine elektrische Eigenschaft zwischen den Elektroden 60, 61, 62, 63, 64 ändert, sobald eine Druckkraft auf den taktilen Sensor 4 einwirkt und dadurch die Zwischenschicht 402 komprimiert wird. Diejenigen Bereiche innerhalb der Sensorsegmente 40, 41, 42, 43, in denen sich die Elektrode 60 der ersten Schicht 400 und die Elektroden 61, 62, 63, 64 der zweiten Schicht 401 überlappen, bilden dabei die aktiven Bereiche, in denen eine Kompression des druckempfindlichen Materials der Zwischenschicht 402 erfasst werden kann. Die Zwischenschicht 402 kann zu diesem Zweck zum Beispiel komprimierbare Elemente aufweisen, so dass die Elektroden 60, 61, 62, 63, 64 der beiden Schichten 400, 401 bei der Einwirkung einer Druckkraft aufeinandergedrückt werden und es zu einem unmittelbaren Kontakt zwischen den Elektroden 60, 61, 62, 63, 64 der beiden Schichten 400, 401 kommt. Wenn alle Elektroden 61, 62, 63, 64 der zweiten Schicht 401 mit der Elektrode 60 der ersten Schicht 400 in einem elektrischen Kontakt sind, ist der Abfüllstutzen 2 korrekt innerhalb des Anschlussstutzens 3 montiert. Der Abfüllstutzen 2 übt einen entsprechend großen Druck auf die Sensorsegmente 40, 41, 42, 43 aus, der die entsprechende elektrische Kontaktierung der Elektroden 60, 61, 62, 63, 64 bewirkt. Wenn der Abfüllstutzen 2 bei einer nachträglichen Manipulation zumindest teilweise aus dem Anschlussstutzen 3 gelöst wurde, kann in mindestens einem der Sensorsegmente 40, 41, 42, 43 der darauf ausgeübte Druck nicht mehr ausreichend sein, um die Elektrode 60 der ersten Schicht 400 mit der zugehörigen Elektrode 61, 62, 63, 64 der zweiten Schicht 401 elektrisch in Kontakt zu bringen. Dieses kann von der Auswerteeinrichtung 5 für das betreffende Sensorsegment 40, 41, 42, 43 sehr einfach erfasst werden.

In alternativen Ausführungsformen besteht auch die Möglichkeit, dass die Zwischenschicht 402 aus einem Material hergestellt ist, welches seinen elektrischen Widerstand bei einer Beaufschlagung mit einer Druckkraft ändert. Eine derartige Zwischenschicht 402 kann insbesondere vollflächig ausgestaltet sein, so dass auch dann, wenn die Elektroden 60, 61, 62, 63, 64 der beiden Schichten 400, 401 nicht in einem unmittelbaren Kontakt miteinander stehen, mittels der Ausweiteeinrichtung 5 diese Widerstandsänderungen in den vier Sensorsegmenten 40, 41, 42, 43 erfasst werden können. Diese Widerstandsänderungen sind ein Maß für den jeweils auf die Sensorsegmente 40, 41, 42, 43 ausgeübten Druck. Durch eine entsprechende Kalibrierung und Zuordnung der gemessenen elektrischen Widerstandswerte zu Druckwerten, kann der Druck in jedem der Sensorsegmente 40, 41, 42, 43 relativ genau bestimmt werden.

Unter Bezugnahme auf Fig. 1 und 4 ist dort ein Teil des Anschlussstutzens 3 der hier nicht weiter im Detail dargestellten Abfüllanlage gezeigt. Dieser Anschlussstutzen 3 ist in diesem Ausführungsbeispiel hohlzylindrisch geformt und weist eine Mantelfläche 30 sowie in einem unteren Bereich eine Aufnahmeöffnung 31 auf, in die der Abfüllstutzen 2 der Abfüllanlage eingesetzt ist.

In einem an die Aufnahmeöffnung 31 in axialer Richtung angrenzenden Bereich ist an einer Innenseite des Anschlussstutzens 3 der vorstehend erläuterte taktile Sensor 4 mit seinen vier einzeln von der Auswerteeinrichtung 5 auswertbaren Sensorsegmenten 40, 41, 42, 43 befestigt. Der taktile Sensor 4 ist in Fig. 1 gestrichelt dargestellt. Der Begriff "angrenzend" soll in diesem Zusammenhang nicht so verstanden werden, dass der taktile Sensor 4 in zwingender Weise unmittelbar an die Aufnahmeöffnung 31 angrenzen muss, sondern dass er auch axial weiter einwärts, aber vorzugsweise in der Nähe der Aufnahmeöffnung 31 des Anschlussstutzens 3 angeordnet sein kann. Die Länge des taktilen Sensors 4 ist so gewählt, dass er sich nach der Montage entlang eines Innenumfangs des Anschlussstutzens 3 erstreckt. In der Montagesolllage ist der taktile Sensor 4 somit geschlossen kreisringförmig ausgebildet.

Der taktile Sensor 4 kann bei der Montage auf ganz unterschiedliche Weise an der Innenseite des Anschlussstutzens 3 befestigt werden. So ist es zum Beispiel möglich, dass der taktile Sensor 4 mit der Innenseite des Anschlussstutzens 3 verklebt ist. Alternativ kann zum Beispiel auch ein hier nicht explizit dargestellter Klemmring vorgesehen sein, der bei der Montage in den Anschlussstutzen 3 eingesetzt wird und der dazu ausgebildet ist, den taktilen Sensor 4 in seiner Montagesolllage vor der Montage des Abfüllstutzens 2 klemmend an der Innenseite des Anschlussstutzens 3 zu fixieren. Grundsätzlich ist auch eine Kombination aus einer Klebeverbindung mit einer Klemmverbindung, die insbesondere mittels des Klemmrings realisiert werden kann, möglich. Der Anschlussstutzen 3 weist in seiner Mantelfläche 30 eine hier nicht explizit dargestellte Bohrung auf, durch die die Elektroden 60, 61, 62, 63, 64 beziehungsweise die elektrischen Anschlusskabel 80, 81, 82, 83, 84, an die die Elektroden 60, 61, 62, 63, 64 angeschlossen sind, aus dem Anschlussstutzen 3 nach außen herausgeführt sind, so dass sie an die Auswerteeinrichtung 5 angeschlossen werden können.

Der Anschlussstutzen 3 ist nach der Anbringung des taktilen Sensors 4 für die Montage des Abfüllstutzens 2 vorbereitet. Der Abfüllstutzen 2 wird in die Aufnahmeöffnung 31 des Anschlussstutzens 3 eingesetzt und übt bei korrekter Montage einen gleichmäßigen Druck auf alle Sensorsegmente 40, 41, 42, 43 des taktilen Sensors 4 aus. Alle Sensorsegmente 40, 41, 42, 43 werden also mit anderen Worten mittels des Abfüllstutzens 2 im Wesentlichen mit dem gleichen Druck an die Innenseite des Anschlussstutzen 3 angepresst. Für jedes der Sensorsegmente 40, 41, 42, 43 kann der auf diese von dem Abfüllstutzen 2 ausgeübte Druck mittels der Auswerteeinrichtung 5 erfasst werden. Wenn die Auswerteeinrichtung 5 für jedes der Sensorsegmente 40, 41, 42, 43 im Wesentlichen den gleichen Druck erfasst, ist der Abfüllstutzen 2 korrekt montiert und befindet sich in seiner Montagesolllage. Die Dichtigkeit der Anordnung wird dabei durch den Abfüllstutzen 2 selbst gewährleistet, der passgenau innerhalb des Anschlussstutzens 3 montiert ist.

Wenn der Abfüllstutzen 2 nicht korrekt montiert wurde oder nachträglich - beispielsweise unter Verwendung eines Schraubendrehers - manipuliert wurde und sich nicht mehr in seiner Montagesolllage befindet, erfasst zumindest eines der Sensorsegmente 40, 41, 42, 43 einen gegenüber dem korrekt montierten Zustand des Abfüllstutzens 2 signifikant veränderten Druck, der von der Auswerteeinrichtung 5 ausgewertet und in eine entsprechende Reaktionsmaßnahme umgesetzt wird. Mögliche Reaktionsmaßnahmen auf dieses Ereignis können beispielsweise das Abschalten der Abfüllanlage und/oder die Ausgabe einer Warnmeldung beziehungsweise eines Warnsignals sein.

Es soll an dieser Stelle betont werden, dass die bei korrekter Montage des Abfüllstutzens 2 innerhalb des Anschlussstutzens 3 von den Sensorsegmenten 40, 41, 42, 43 gemessenen Druckwerte nicht exakt gleich sein müssen. Bei anderen geometrischen Bauformen beziehungsweise Anordnungen, bei denen zum Beispiel der Anschlussstutzen 3 und der Abfüllstutzen 2 von ihren kreiszylindrischen Formen und der taktile Sensor 4 von der hier gezeigten Kreisringform abweichen, können sich die von den Sensorsegmenten 40, 41, 42, 43 gemessenen Druckwerte auch bei korrekter Montage des Abfüllstutzens 2 von vornherein bereits deutlich voneinander unterscheiden.

Vorzugsweise wird daher für jedes der Sensorsegmente 40, 41, 42, 43 ein Druckreferenzwert definiert, der den bei der korrekten Montage des Abfüllstutzens 2 auf die jeweiligen Sensorsegmente 40, 41, 42, 43 ausgeübten Druck repräsentiert. Die Auswerteeinrichtung 5 wird entsprechend auf diese Druckreferenzwerte angelernt. Ferner wird vorzugsweise für jeden der Druckreferenzwerte ein Toleranzbereich definiert. Dieser Toleranzbereich gibt solche Druckwerte an, bei denen der Abfüllstutzen 2 noch als korrekt montiert angesehen werden kann. Wenn der gemessene Druck zumindest eines der Sensorsegmente 40, 41, 42, 43 außerhalb des für das betreffende Sensorsegment 40, 41, 42, 43 definierten Toleranzbereichs liegt, deutet dieses insbesondere auf eine nachträgliche Manipulation des Abfüllstutzens 2 hin, so dass die Auswerteeinrichtung 5 die entsprechenden Reaktionsmaßnahmen einleiten kann.

Mittels des hier vorgestellten Manipulationsdetektionssystem 1 können nachträgliche Manipulationen zumindest eines Abfüllstutzens 2 einer Abfüllanlage auf sehr einfache und sichere Weise, insbesondere auch automatisiert, erfasst werden. Beispielsweise kann die Auswerteeinrichtung 5 auch dazu eingerichtet sein, bei einer Abfüllanlage mit einer Mehrzahl von Abfüllstutzen 2, die in entsprechende Anschlussstutzen 3 der Abfüllanlage eingesetzt sind, eine Mehrzahl taktiler Sensoren 4 zu überwachen.

## Patentansprüche

1. Abfüllanlage, umfassend einen Abfüllstutzen (2) und einen Anschlussstutzen (3), wobei der Abfüllstutzen (2) in den Anschlussstutzen (3) eingesetzt ist, **gekennzeichnet durch** ein Manipulationsdetektionssystem (1) für den Abfüllstutzen (2), umfassend einen flächigen, taktilen Sensor (4) mit einer Anzahl n ≥ 2 druckempfindlicher und individuell auswertbarer Sensorsegmente (40, 41, 42, 43), der sich in einem Anschlussbereich für den Abfüllstutzen (2) entlang eines Innenumfangs des Anschlussstutzens (3) erstreckt und zwischen dem Anschlussstutzen (3) und dem Abfüllstutzen (2) angeordnet ist, sowie eine Auswerteeinrichtung (5), die an die Sensorsegmente (40, 41, 42, 43) angeschlossen ist und die dazu ausgebildet ist, für jedes der Sensorsegmente (40, 41, 42, 43) einen auf dieses einwirkenden Druck zu erfassen.

2. Abfüllanlage nach Anspruch 1, **dadurch gekennzeichnet, dass** der taktile Sensor (4) eine erste Schicht (400) und eine zweite Schicht (401) aufweist, die mit elektrisch leitfähigen Elektroden (60, 61, 62, 63, 64) versehen sind und mittels einer drucksensitiven, komprimierbaren Zwischenschicht (402) voneinander beabstandet sind, wobei sich bei der Komprimierung der Zwischenschicht (402) eine elektrische Eigenschaft zwischen den Elektroden (60, 61, 62, 63, 64) ändert, die mittels der Auswerteeinrichtung (5) erfassbar ist.

3. Abfüllanlage nach einem der Ansprüche 1 oder 2, **dadurch gekennzeichnet, dass** die mit den Elektroden (60, 61, 62, 63, 64) versehenen Schichten (400, 401) als Flächengebilde, insbesondere als textile Flächengebilde mit darin eingenähten oder eingewobenen Elektroden (60, 61, 62, 63, 64) aus elektrisch leitfähigen Garnen, ausgeführt sind.

4. Abfüllanlage nach einem der Ansprüche 2 oder 3, **dadurch gekennzeichnet, dass** die erste Schicht (400) des taktilen Sensors (4) mit zumindest einer elektrisch leitfähigen Elektrode (60) versehen ist, die sich durch alle Sensorsegmente (40, 41, 42, 43) hindurch erstreckt.

5. Abfüllanlage nach einem der Ansprüche 2 bis 4, **dadurch gekennzeichnet, dass** die zweite Schicht (401) des taktilen Sensors (4) eine Anzahl von Elektroden (61, 62, 63, 64) aufweist, die der Anzahl der Sensorsegmente (40, 41, 42, 43) oder einem Vielfachen der Anzahl der Sensorsegmente (40, 41, 42, 43) entspricht.

6. Abfüllanlage nach einem der Ansprüche 1 bis 5, **dadurch gekennzeichnet, dass** in der Auswerteeinrichtung (5) für jedes der Sensorsegmente (40, 41, 42, 43) ein Druckreferenzwert definiert ist, der den bei der korrekten Montage des Abfüllstutzens (2) in dem Anschlussstutzen (3) auf die jeweiligen Sensorsegmente (40, 41, 42, 43) ausgeübten Druck repräsentiert.

7. Abfüllanlage nach Anspruch 6, **dadurch gekennzeichnet, dass** in der Auswerteeinrichtung (5) für jeden der Druckreferenzwerte der Sensorsegmente (40, 41, 42, 43) ein Toleranzbereich definiert ist.

8. Verfahren zum Detektieren einer Manipulation an einem Abfüllstutzen (2) einer Abfüllanlage, wobei der Abfüllstutzen (2) in einen Anschlussstutzen (3) der Abfüllanlage eingesetzt ist, umfassend die Schritte:
- Bereitstellen eines flächigen, taktilen Sensors (4) mit einer Anzahl n ≥ 2 druckempfindlicher und individuell auswertbarer Sensorsegmente (40, 41, 42, 43), der in einem Anschlussbereich für den Abfüllstutzen (2) zwischen dem Anschlussstutzen (3) und dem Abfüllstutzen (2) derart positioniert wird, dass er sich entlang eines Innenumfangs des Anschlussstutzens (3) erstreckt und von dem in den Anschlussstutzen (3) eingesetzten Abfüllstutzen (2) mit einem Druck beaufschlagt wird,
- Erfassen des auf jedes der Sensorsegmente (40, 41, 42, 43) ausgeübten Drucks mittels einer Auswerteeinrichtung (5), die an den taktilen Sensor (4) angeschlossen wird, und
- Überprüfen, ob die gemessenen Druckwerte eine Manipulation des Abfüllstutzens (2) indizieren.

9. Verfahren nach Anspruch 8, **dadurch gekennzeichnet, dass** in der Auswerteeinrichtung (5) für jedes der Sensorsegmente (40, 41, 42, 43) ein Druckreferenzwert definiert wird, der den bei der korrekten Montage des Abfüllstutzens (2) in dem Anschlussstutzen (3) auf die jeweiligen Sensorsegmente (40, 41, 42, 43) ausgeübten Druck repräsentiert.

10. Verfahren nach Anspruch 9, **dadurch gekennzeichnet, dass** in der Auswerteeinrichtung (5) für jeden der Druckreferenzwerte der Sensorsegmente (40, 41, 42, 43) ein Toleranzbereich definiert wird.

## Claims

1. Filling system, comprising a filling nozzle (2) and a connection piece (3), wherein the filling nozzle (2) is inserted into the connection piece (3), **characterised by** a manipulation detection system (1) for the filling nozzle (2), comprising a flat, tactile sensor (4) with a number n ≥ 2 of pressure-sensitive and individually evaluable sensor segments (40, 41, 42, 43), which extends in a connection region for the filling nozzle (2) along an inner circumference of the connection piece (3) and is arranged between the connection piece (3) and the filling nozzle (2), and an evaluation device (5) which is connected to the sensor segments (40, 41, 42, 43) and which is configured to detect for each of the sensor segments (40, 41, 42, 43) a pressure acting thereon.

2. Filling system according to claim 1, **characterised in that** the tactile sensor (4) has a first layer (400) and a second layer (401), which are provided with electrically conductive electrodes (60, 61, 62, 63, 64) and are spaced apart from one another by means of a pressure-sensitive, compressible intermediate layer (402), wherein on the compression of the intermediate layer (402) an electrical property between the electrodes (60, 61, 62, 63, 64) changes which is detectable by means of the evaluation device (5).

3. Filling system according to any of claims 1 or 2, **characterised in that** the layers (400, 401) provided with the electrodes (60, 61, 62, 63, 64) are designed as flat structures, in particular as textile flat structures with electrodes (60, 61, 62, 63, 64) of electrically conductive yarns sewn or woven into them.

4. Filling system according to any of claims 2 or 3, **characterised in that** the first layer (400) of the tactile sensor (4) is provided with at least one electrically conductive electrode (60) which extends through all sensor segments (40, 41, 42, 43).

5. Filling system according to any of claims 2 to 4, **characterised in that** the second layer (401) of the tactile sensor (4) has a number of electrodes (61, 62, 63, 64), which corresponds to the number of sensor segments (40, 41, 42, 43) or a multiple of the number of sensor segments (40, 41, 42, 43).

6. Filling system according to any of claims 1 to 5, **characterised in that** in the evaluation device (5) for each of the sensor segments (40, 41, 42, 43) a pressure reference value is defined which represents the pressure exerted on the respective sensor segments (40, 41, 42, 43) when the filling nozzle (2) is correctly mounted in the connection piece (3).

7. Filling system according to claim 6, **characterised in that** a tolerance range is defined in the evaluation device (5) for each of the pressure reference values of the sensor segments (40, 41, 42, 43).

8. Method for detecting a manipulation on a filling nozzle (2) of a filling system, wherein the filling nozzle (2) is inserted into a connection piece (3) of the filling system, comprising the steps:
- providing a flat, tactile sensor (4) with a number n ≥ 2 of pressure-sensitive and individually evaluable sensor segments (40, 41, 42, 43), which is positioned in a connection area for the filling nozzle (2) between the connection piece (3) and the filling nozzle (2) such that it extends along an inner circumference of the connection piece (3) and is subjected to pressure from the filling nozzle (2) inserted into the connection piece (3),
- detecting the pressure exerted on each of the sensor segments (40, 41, 42, 43) by means of an evaluation device (5), which is connected to the tactile sensor (4), and
- checking whether the measured pressure values indicate a manipulation of the filling nozzle (2).

9. Method according to claim 8, **characterised in that** in the evaluation device (5) for each of the sensor segments (40, 41, 42, 43) a pressure reference value is defined which represents the pressure exerted on the respective sensor segments (40, 41, 42, 43) when the filling nozzle (2) is correctly mounted in the connection piece (3).

10. Method according to claim 9, **characterised in that** a tolerance range is defined in the evaluation device (5) for each of the pressure reference values of the sensor segments (40, 41, 42, 43).

## Revendications

1. Installation de remplissage, comprenant un embout de remplissage (2) et un embout de raccordement (3), dans laquelle l'embout de remplissage (2) est inséré dans l'embout de raccordement (3), **caractérisée par** un système de détection de manipulation (1) pour l'embout de remplissage (2), comprenant un capteur tactile plat (4) avec un nombre n ≥ 2 de segments de capteur (40, 41, 42, 43) sensibles à la pression et pouvant être évalués individuellement, qui s'étend dans une zone de raccordement pour l'embout de remplissage (2) le long d'une circonférence intérieure de l'embout de raccordement (3) et est agencé entre l'embout de raccordement (3) et l'embout de remplissage (2), et un dispositif d'évaluation (5) qui est raccordé aux segments de capteur (40, 41, 42, 43) et qui est conçu, pour chacun des segments de capteur (40, 41, 42, 43), pour détecter une pression agissant sur ceux-ci.

2. Installation de remplissage selon la revendication 1, **caractérisée en ce que** le capteur tactile (4) comporte une première couche (400) et une seconde couche (401) qui sont pourvues d'électrodes électriquement conductrices (60, 61, 62, 63, 64) et qui sont séparées l'une de l'autre par une couche intermédiaire compressible sensible à la pression (402), dans laquelle lorsque la couche intermédiaire (402) est comprimée, une propriété électrique entre les électrodes (60, 61, 62, 63, 64) change, qui peut être détectée par l'intermédiaire du dispositif d'évaluation (5).

3. Installation de remplissage selon l'une quelconque des revendications 1 ou 2, **caractérisée en ce que** les couches (400, 401) pourvues des électrodes (60, 61, 62, 63, 64) sont réalisées sous la forme de structures plates, en particulier sous la forme de structures plates textile avec des électrodes (60, 61, 62, 63, 64) cousues ou tissées en leur sein, en fils électriquement conducteurs.

4. Installation de remplissage selon l'une quelconque des revendications 2 ou 3, **caractérisée en ce que** la première couche (400) du capteur tactile (4) est pourvue d'au moins une électrode électriquement conductrice (60) qui s'étend à travers tous les segments de capteur (40, 41, 42, 43).

5. Installation de remplissage selon l'une quelconque des revendications 2 à 4, **caractérisée en ce que** la seconde couche (401) du capteur tactile (4) comporte un nombre d'électrodes (61, 62, 63, 64), qui correspond au nombre de segments de capteur (40, 41, 42, 43) ou à un multiple du nombre de segments de capteur (40, 41, 42, 43).

6. Installation de remplissage selon l'une quelconque des revendications 1 à 5, **caractérisée en ce qu'**une valeur de référence de pression est définie dans le dispositif d'évaluation (5) pour chacun des segments de capteur (40, 41, 42, 43) qui, via l'installation correcte de l'embout de remplissage (2) dans l'embout de raccordement (3), représente la pression exercée sur les segments de capteur respectifs (40, 41, 42, 43).

7. Installation de remplissage selon la revendication 6, **caractérisée en ce qu'**une plage de tolérance est définie dans le dispositif d'évaluation (5) pour chacune des valeurs de référence de pression des segments de capteur (40, 41, 42, 43).

8. Procédé de détection d'une manipulation d'un embout de remplissage (2) d'une installation de remplissage, dans lequel l'embout de remplissage (2) est inséré dans un embout de raccordement (3) de l'installation de remplissage, comprenant les étapes consistant à :
- fournir un capteur tactile plat (4) avec un nombre n ≥ 2 segments de capteur sensibles à la pression et pouvant être évalués individuellement (40, 41, 42, 43), qui est positionné dans une zone de raccordement pour l'embout de remplissage (2) entre l'embout de raccordement (3) et l'embout de remplissage (2), de telle sorte qu'il s'étend le long d'une circonférence intérieure de l'embout de raccordement (3) et est comprimé par l'embout de remplissage (2) inséré dans l'embout de raccordement (3),
- détecter la pression exercée sur chacun des segments de capteur (40, 41, 42, 43) au moyen d'un dispositif d'évaluation (5) qui est raccordé au capteur tactile (4), et
- vérifier si les valeurs de pression mesurées indiquent une altération de l'embout de remplissage (2).

9. Procédé selon la revendication 8, **caractérisé en ce qu'**une valeur de référence de pression est définie dans le dispositif d'évaluation (5) pour chacun des segments de capteur (40, 41, 42, 43) qui, via l'installation correcte de l'embout de remplissage (2) dans l'embout de raccordement (3), représente une pression exercée sur les segments de capteur respectifs (40, 41, 42, 43).

10. Procédé selon la revendication 9, **caractérisé en ce qu'**une plage de tolérance est définie dans le dispositif d'évaluation (5) pour chacune des valeurs de référence de pression des segments de capteur (40, 41, 42, 43).
